# EUROPEAN PATENT SPECIFICATION

(11) **EP 2 798 957 B1**
(45) Date of publication and mention of the grant of the patent: **08.06.2016**
(21) Application number: 14165307.1
(22) Date of filing: 18.04.2014
(51) Int. Cl.: A21C 3/02

(54) **Sheeter machine**
Auswalzmaschine
Laminoir

(30) Priority: 02.05.2013 IT VI20130124
(43) Date of publication of application: 05.11.2014
(73) Proprietor: Rollmatic S.r.l., 36015 Schio (VI) (IT)
(72) Inventor: Pasin, Lino, 36015 Schio (VI) (IT); Lobbia, Corrado, 36100 Vicenza (IT)
(74) Representative: Bonini, Ercole

(56) References cited:
- WO-A1-93/07756
- WO-A2-95/05742
- AU-B2- 611 574
- US-A- 3 023 714
- US-A- 5 686 129

## Description

The present invention concerns a sheeter machine that can be adjusted manually, particularly suited to be used for processing dough in such a way as to obtain a thin sheet.

A sheeter machine of the known type, described for example in the patent document US 3,023,714, comprises a horizontal workbench on which the dough to be processed is laid.

The dough is flattened by making it pass between two superimposed rollers that are mutually parallel and arranged crosswise with respect to the workbench, in a substantially central position with respect to it.

The distance between the rollers and, therefore, the thickness of the resulting sheet, can be adjusted by the operator by means of a revolving control element, for example a lever, which is connected to the upper roller by means of a kinematic mechanism that converts the rotation of the control element into a corresponding vertical translation of the upper roller.

In this way, by rotating the control element in one or the other direction of rotation, it is possible to move the upper roller respectively towards or away from the lower roller.

The machine comprises also a device suited to inhibit the spontaneous movement of the transmission kinematic mechanism.

Said locking device makes it possible to set the distance between the two rollers in a stable manner after adjusting it, thus avoiding any mutual movement between the two rollers due to the effect of the weight of the upper roller and/or of the resistance of the dough to compression during the processing cycle.

In particular, the locking device comprises an arched profile associated with the frame of the machine and provided with notches in which a pawl associated with the control element is fitted.

The pawl is associated with the control element through a releasing device that can be used by the operator to release the pawl from the notches, and thus release also the control element when it is necessary to perform the adjustment operation.

The machine comprises also a counteracting spring that is configured in such a way as to partially balance the weight of the upper roller, so as to limit the overall force that is transmitted to the control element and make it easier for the operator to control it.

To perform the processing cycle, the operator places the dough on the workbench and sets the distance between the rollers at an initial value.

Then the operator uses a control device to set the rollers rotating, in such a way that the dough is driven on the opposite half of the workbench and, at the same time, is compressed between the rollers.

Successively, the operator reduces the distance between the rollers using the control element, after which he/she makes the dough even thinner by making it transit in the opposite direction with respect to the previous processing direction.

The steps described above can be repeated several times, progressively reducing the distance between the two rollers until obtaining a sheet of the desired thickness.

The sheeter machine described above poses a first drawback, represented by the fact that the locking device is rather bulky and unaesthetic, in particular due to the presence of the arched profile.

In fact, the arched profile must have a relatively large diameter in order to allow the pawl to generate a torque sufficient to counteract the high compression force exerted on the dough and the considerable weight of the roller that are transmitted onto the control element.

A further drawback posed by the machine described above lies in that the adjustment operation is relatively complicated to carry out, in fact the operator needs to perform two distinct movements, that is, he/she has to operate the releasing device in order to free the pawl and then to rotate the control element.

A further drawback lies in that, at the moment when the control element is released, the operator suddenly has to face the force acting on the control element due to the combined effect of the weight of the roller and of the counteracting spring.

Consequently, it may happen that the control element rotates by a given angle before the operator actively intervenes to counteract the rotation. Furthermore, as the counteracting spring does not generate a constant force, the force resulting on the control element varies along the stroke of the latter, further affecting ease of adjustment.

A further drawback posed by the machine described above is represented by the fact that it does not allow the distance between the rollers to be adjusted continuously along the entire stroke of the control element, in fact the adjustment can be performed only according to discrete intervals corresponding to the notches that are present in the arched profile.

It is the object of the present invention to overcome all the drawbacks mentioned above that are typical of the sheeter machines of the known type described above.

In particular, it is the object of the present invention to provide a sheeter machine with manual adjustment of the distance between the rollers, in which the adjustment operation is easier for the operator compared to that which is allowed by the machines of the known type.

It is also the object of the invention to provide a machine in which the adjustment operation can be performed continuously along the stroke of the control element.

The objects specified above are achieved through the construction of a sheeter machine according to the main claim.

Further detail characteristics of the invention are described in the corresponding dependent claims.

Advantageously, the increased ease of adjustment of the machine that is the subject of the invention makes the adjustment operation quicker and reduces the operator's stress.

Still advantageously, the possibility to perform a continuous adjustment operation allows the final thickness of the sheet to be defined with higher precision, especially in the case of reduced thicknesses.

The said objects and advantages, together with others that will be described below, are highlighted during the description of a preferred embodiment of the invention that is provided by way of non-limiting example with reference to the attached drawings, wherein:
- Figure 1 shows an axonometric view of the sheeter machine that is the subject of the invention;
- Figure 2 shows a detail of Figure 1;
- Figure 3 shows an exploded axonometric view of some parts of the detail of Figure 2;
- Figure 4 shows a partially sectional plan view of some parts of the detail of Figure 2.

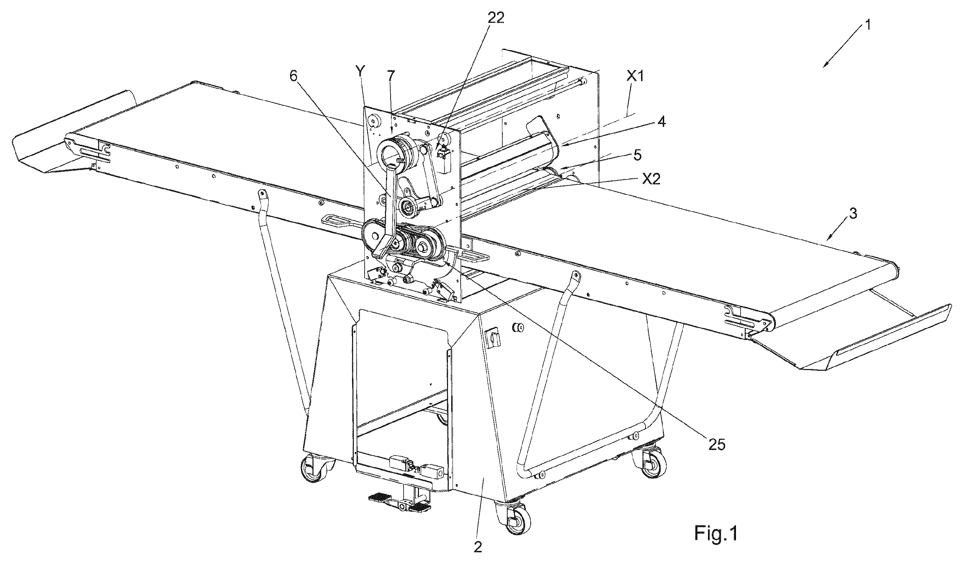

The sheeter machine that is the subject of the invention, indicated as a whole by the reference number **1** in Figure 1, is particularly suited to process dough to produce a sheet.

The machine comprises a frame **2** intended to be rested on the ground, associated with a preferably horizontal workbench **3.**

Preferably but not necessarily, the workbench **3** can be moved in such a way as to move the dough during processing and can be constituted, for example, by one or more conveyor belts.

The sheeter machine **1** comprises also two rollers **4** and **5** that are revolvingly associated with the frame **2** so that the respective longitudinal axes **X1** and **X2** are arranged parallel to each other and to the workbench **3,** and are preferably superimposed to each other.

Said rollers **4, 5** are preferably arranged in a central position with respect to the length of the workbench **3,** so that the plane defined by their longitudinal axes **X1, X2** divides the workbench **3** into two halves substantially equal to each other.

At least one of the two rollers **4, 5,** preferably the lower roller **5,** is associated with drive means **25** that are suited to be controlled by the operator when needing to set it rotating in either of the two directions of rotation.

The distance between said rollers **4, 5** can be adjusted by means of a control element **6** that can be accessed by an operator and is revolvingly associated with the frame **2** around a rotation axis **Y.**

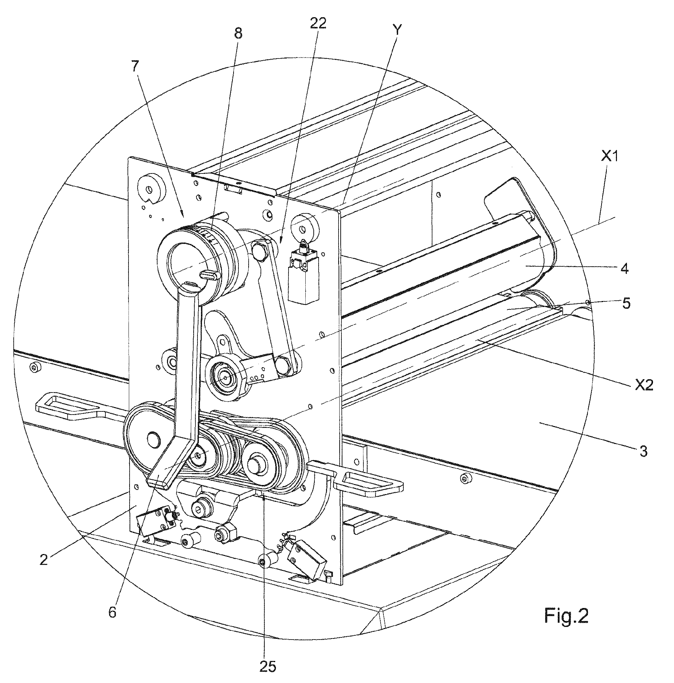

Preferably, the control element **6** is a lever, although in variant embodiments of the invention it may be constituted by a handwheel or another component. As can be observed in greater detail in Figure 2, said control element **6** is connected to a first one of said rollers **4,** preferably but not necessarily the upper roller, through a transmission kinematic mechanism **22.**

Said transmission kinematic mechanism **22** is configured in such a way as to transform the rotation of the control element **6** around the rotation axis **Y** into a translation of the first roller **4** perpendicularly to the longitudinal axis **X2** of the second roller **5**.

The sheeter machine **1** comprises also a locking device **7** suited to inhibit the spontaneous movement of the transmission kinematic mechanism **22** due to the effect, for example, of the weight of the first roller **4,** of the resistance of the dough to compression during the processing operation and of any other force acting on the transmission kinematic mechanism **22** itself.

According to the invention, the locking device **7** is configured in such a way that it can be released in either of the two directions of rotation of the control element **6** through an idle rotation, with predefined amplitude, of the control element **6** with respect to the frame **2** in said direction of rotation.

Obviously, the ability of the locking device **7** to be released through the rotation of the control element **6** in the same direction of adjustment achieves the object to simplify the adjustment operation, making it easier to be carried out. In fact, both the release of the locking device **7** and the actual adjustment can be obtained through the same movement of the control element **6.**

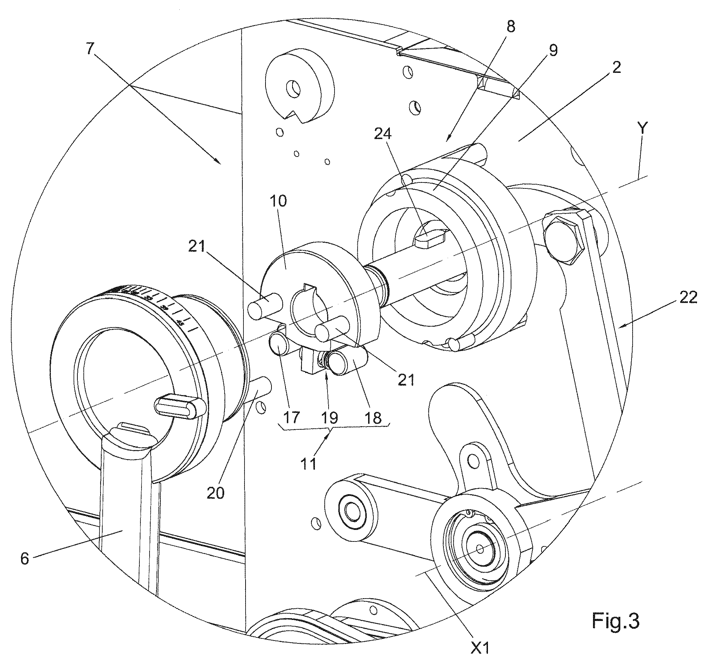

Preferably, and as shown in Figure 3, the locking device **7** is a bidirectional freewheel **8,** interposed between the control element **6** and the transmission kinematic mechanism **22** so as to connect them.

As is known, the bidirectional freewheel is a freewheel that is capable of transmitting a rotational movement between two axes in both directions but that, if necessary, can be made idle in either direction of rotation. Advantageously, as various types of bidirectional freewheels are already available on the market, these can be easily adapted so that they can be used in the sheeter machine **1,** which thus contributes to limiting the production cost of the latter.

Preferably, the bidirectional freewheel **8** comprises a first ring **9** that is integral with the frame **2** and a second ring **10** that is revolvingly associated with said first ring **9** around the rotation axis **Y** of the control element **6.**

The second ring **10** is associated with the transmission kinematic mechanism **22,** preferably by means of a tab **24.**

The second ring **10** is also connected to the control element **6** in such a way that the former can be set rotating by the latter, preferably through one or more reference elements **21** that are configured so as to allow said idle rotation of the element **6** with respect to the ring **10** before setting the latter rotating. Preferably, said reference elements **21** comprise a pair of pins projecting from the second ring **10,** which are accommodated, leaving a clearance, in corresponding housings obtained in the control element **6.**

In particular, said clearance is such as to allow said idle rotation of the control element **6.**

Preferably, said pins are revolvingly associated with the second ring **10** around an eccentric axis, so that their rotation around said eccentric axis allows the adjustment of said clearance and, therefore, of the idle rotation of the control element **6.**

It is evident that in variant embodiments of the invention the adjustment of the reference elements **21** can be performed even with different means than those just described above.

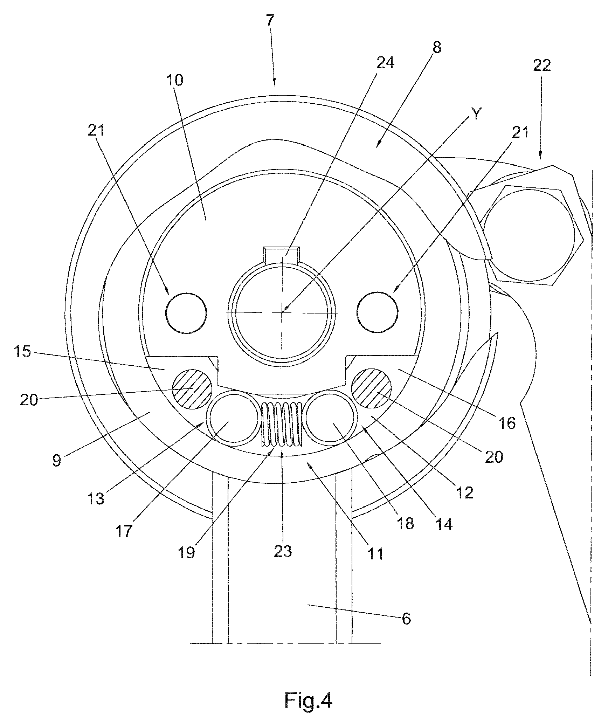

As can be observed in greater detail in Figure 4, where the control element **6** is partially sectioned so that it is possible to see the underlying parts, the bidirectional freewheel **8** comprises a stop unit **11** removably arranged in an intermediate space **12** included between the first ring **9** and the second ring **10.**

In particular, the intermediate space **12** and the stop unit **11** are configured in such a way that they can be arranged in a locked configuration, in which the stop unit **11** is fixed between the rings **9, 10** in such a way as to inhibit their mutual rotation, and in a free configuration, in which the stop unit **11** is arranged in such a way as to allow said mutual rotation.

In particular, the stop unit **11** is configured in such a way that it spontaneously assumes said locked configuration.

In this way, the bidirectional freewheel **8** is normally locked and, therefore, makes the second ring **10** integral with the frame **2,** so as to inhibit the movement of the transmission kinematic mechanism **22.**

Concerning the intermediate space **12,** it has a central area **23** from which two tapered areas **13, 14** develop according to opposite directions.

The width of each tapered area **13, 14** perpendicularly to the rotation axis **Y** of the second ring **10** decreases in the direction away from said central area **23,** varying between a maximum and a minimum width.

Concerning the stop unit **11,** it comprises two shaped bodies **17, 18** with preferably cylindrical cross section, each located in a corresponding one of said tapered areas **13, 14** and having a maximum dimension that exceeds said maximum width on the plane perpendicular to the rotation axis **Y.**

In particular, the diameter of the cylindrical shaped bodies **17, 18** is included between said minimum width and said maximum width.

In this way, each shaped body **17, 18** can be fixed between the two rings **9, 10** by moving it towards the minimum width of the corresponding tapered area **13, 14,** so as to inhibit the rotation of the second ring **10** in the direction towards the opposite tapered area **13, 14.**

Obviously, in order to allow the rotation between the rings **9, 10** in a given direction of rotation, it is sufficient to move towards the central area of the intermediate space **12** the corresponding shaped body **17, 18** that inhibits said direction of rotation.

The bidirectional freewheel **8** comprises also elastic means **19** compressed between the two shaped bodies **17, 18** in such a way as to move the latter away from each other.

The action of the elastic means **19** places the two shaped bodies **17, 18** spontaneously in the corresponding fixed positions, so as to lock the bidirectional freewheel **8** in both directions of rotation.

The bidirectional freewheel **8** is preferably released by means of two projecting elements **20** belonging to the control element **6,** visible in Figure 4 and, only partially, in Figure 3, each one of which is located in a corresponding manoeuvring area **15, 16** belonging to said intermediate space **12.**

In particular, each manoeuvring area **15, 16** communicates with a corresponding tapered area **13, 14** so that, following a limited idle rotation of the control element **6,** the corresponding projecting element **20** is arranged in contact with the shaped body **17, 18** arranged in the tapered area **13, 14** itself, pushing it towards the central area **23** in such a way as to release the second ring **10** in the direction of the idle rotational movement. Advantageously, said configuration of the bidirectional freewheel **8** makes the movement of the control element **6** particularly smooth, as it is released gradually due to the idle rotation of the control element **6.**

Furthermore, the release of the control element **6** by the operator stops the bidirectional freewheel **8** immediately, since the force necessary to counteract the elastic means **19** is no more available and, therefore, said elastic means move the shaped body **17, 18** that had been released back to the locked position.

Consequently, the object to obtain a very precise adjustment of the rollers **4, 5** is thus achieved.

The bidirectional freewheel **8** with the structure described above makes it possible to limit to a minimum the movement of the shaped bodies **17, 18** between the locked position and the released position, so as to limit the corresponding rotation of the control element **6** to just a few tenths or hundredths of a degree, to the advantage of the precision of the movement and, therefore, of the adjustment operation.

Preferably, the sheeter machine **1** comprises balancing means, not illustrated in the figures but known per se, suited to exert on the first roller **4** a force counteracting the weight of the first roller **4** itself.

Advantageously, the balancing means facilitate the adjustment of the first roller **4.**

In particular, the adjustment in the direction contrary to the weight of the first roller **4** is facilitated, as the balancing means reduce the overall force that must be exerted by the operator.

The balancing means facilitate also the adjustment in the direction of rotation corresponding to the weight of the first roller **4.**

In fact, it should be considered that, as soon as the bidirectional freewheel **8** has been released in said direction of rotation, the weight of the first roller **4** spontaneously sets the second ring **10** rotating and, therefore, allows the corresponding shaped body **17, 18** to return to the fixed position, again inhibiting rotation.

Said locking effect is avoided by rotating the control element **6** at a speed that is sufficient to advance the spontaneous rotation of the second ring **10.**

The balancing means slow down said spontaneous rotation of the second ring **10** and thus reduce the minimum speed at which the operator must operate the control element **6** in order to obtain a continuous movement.

More particularly, the smaller the absolute value of the force resulting from the weight of the roller and the force of the balancing means, the more precise and simple the operation of the control element **6.**

Preferably, the balancing means comprise a gas cylinder that is capable of supplying a substantially uniform force over the entire stroke of the cylinder itself.

Consequently, the gas cylinder can be advantageously be selected in such a way that the force exerted by it almost perfectly balances the weight of the first roller **4** along the entire adjustment stroke of the control element **6,** so that the resulting force is substantially null.

According to a variant embodiment of the invention, not illustrated herein, the balancing means comprise a counterweight.

Obviously, variant embodiments of the invention may comprise balancing means of a type different from those described above, provided that they are capable of exerting a substantially uniform force over the entire adjustment stroke.

It is however evident that in further embodiments of the invention the balancing means may comprise springs or other equivalent means that exert a variable force along the adjustment stroke.

The balancing means with variable force can be particularly advantageous, for example, in combination with transmission kinematic mechanisms **22** whose transmission ratio varies along the stroke of the roller and which can be balanced only by means of a variable counteracting force.

It is evident that in variant embodiments of the invention the different balancing means described above can be combined with each other.

Preferably, the sheeter machine **1** comprises also an end-of-stroke device, not shown in the figures but known per se, configured in such a way as to limit the overall stroke of the control element **6.**

Advantageously, said end-of stroke device makes it possible to set the final thickness of the sheet to be obtained, with no need for the operator to pay excessive attention to the adjustment operations during the processing cycle. In practice, the sheeter machine **1** described above is used in a way that is analogous to the way in which a manual sheeter machine of the known type is used, with the difference that the sheeter machine **1** of the invention is adjusted by simply pushing the control element **6** in one of its two directions of rotation.

A limited idle rotation of the control element **6** is sufficient to release the transmission kinematic mechanism **22,** thus making it possible to adjust the position of the first roller **4** with respect to the second roller **5** through the further rotation of the control element **6.**

Once the desired adjustment has been obtained, which can be verified, for example, using a graduated scale associated with the control element **6,** the operator stops the rotation of the control element **6** itself, thus immediately locking the transmission kinematic mechanism **22.**

Based on the explanation provided above, it can be understood that the sheeter machine that is the subject of the invention achieves all the set objects.

In particular, the possibility to release the transmission kinematic mechanism through the same movement of the control element that allows the adjustment to be performed simplifies and facilitates the adjustment operation itself. Furthermore, the use of a bidirectional freewheel makes it possible to perform a continuous adjustment operation along the entire stroke of the control element.

## Claims

1. Sheeter machine (1) comprising:
- a frame (2) resting on the ground;
- a workbench (3) associated with said frame (2);
- two rollers (4, 5) revolvingly associated with said frame (2), having corresponding longitudinal axes (X1, X2) parallel to each other and to said workbench (3);
- a control element (6) suited to be accessed by an operator, revolvingly associated with said frame (2) around a rotation axis (Y);
- a transmission kinematic mechanism (22) that connects said control element (6) to a first one of said rollers (4) in such a way that the rotation of said control element (6) makes it possible to adjust the distance of said first roller (4) from the second one of said rollers (5);
- a locking device (7) suited to inhibit the spontaneous movement of said transmission kinematic mechanism (22);
**characterized in that** said locking device (7) is a bidirectional freewheel (8) that connects said control element (6) to said transmission kinematic mechanism (22), configured in such a way that it can be released in either direction of rotation through an idle rotation, with predefined amplitude, of said control element (6) in said direction of rotation.

2. Sheeter machine (1) according to claim 1, **characterized in that** said bidirectional freewheel (8) comprises:
- a first ring (9) integral with said frame (2);
- a second ring (10) revolvingly associated with said first ring (9) around said rotation axis (Y), associated with said transmission kinematic mechanism (22) and with said control element (6) in such a way that it can be set rotating by said control element (6);
- a stop unit (11) removably arranged in an intermediate space (12) included between said first ring (9) and said second ring (10);
said intermediate space (12) and said stop unit (11) being configured in such a way as to define a free configuration in which the mutual rotation of said rings (9, 10) is allowed and a locked configuration in which said stop unit (11) is fixed between said rings (9, 10) so as to inhibit said mutual rotation, said stop unit (11) being configured in such a way as to spontaneously assume said locked configuration.

3. Sheeter machine (1) according to claim 2, **characterized in that** said intermediate space (12) has two tapered areas (13, 14) that develop in opposing directions, wherein the width of each one of said tapered areas (13, 14) perpendicularly to said axis of rotation (Y) decreases in the direction away from the other one of said tapered areas (13, 14) from a maximum width to a minimum width, said stop unit (11) comprising two shaped bodies (17, 18), each one arranged in a corresponding one of said tapered areas (13, 14) and having a maximum dimension that exceeds said minimum width, and elastic means (19) compressed between said two shaped bodies (17, 18) so as to move them mutually away from each other.

4. Sheeter machine (1) according to claim 3, **characterized in that** said intermediate space (12) has two manoeuvring areas (15, 16), each communicating with a corresponding one of said tapered areas (13, 14), wherein said control element (6) comprises two projecting elements (20), each arranged in a corresponding one of said manoeuvring areas (15, 16) and configured so as to push said shaped body (17, 18) located in the tapered area (13, 14) communicating with said manoeuvring area (15, 16) towards the other shaped body (17, 18) following said idle rotation of said control element (6) in such a way as to release said second ring (10) in the direction of said idle rotation.

5. Sheeter machine (1) according to any of the preceding claims, **characterized in that** it comprises balancing means suited to exert on said first roller (4) a force counteracting the weight of said first roller (4).

6. Sheeter machine (1) according to claim 5, **characterized in that** said balancing means comprise a gas cylinder.

7. Sheeter machine (1) according to any of claims 5 or 6, **characterized in that** said balancing means comprise a spring.

8. Sheeter machine (1) according to any of the preceding claims, **characterized in that** it comprises an end-of-stroke device configured so as to limit the overall stroke of said control element (6).

9. Sheeter machine (1) according to any of the preceding claims, **characterized in that** said two rollers (4, 5) are arranged in such a way that the plane defined by said longitudinal axes (X1, X2) divides said workbench (3) into two halves.

## Patentansprüche

1. Ausrollmaschine (1), Folgendes umfassend:
- einen Rahmen (2), der auf dem Boden steht;
- einen mit dem besagten Rahmen (2) verbundenen Arbeitstisch (3);
- zwei drehend mit dem besagten Rahmen (2) verbundene Walzen (4, 5), die entsprechende Längsachsen (X1, X2) haben, welche parallel zueinander und zu dem besagten Arbeitstisch (3) stehen;
- ein Steuerelement (6), dazu geeignet, für einen Bediener zugänglich zu sein, und um eine Drehachse (Y) drehend mit dem besagten Rahmen (2) verbunden;
- einen Antriebs-Kinematikmechanismus (22), der das besagte Steuerelement (6) mit einer ersten der besagten Walzen (4) verbindet, so dass die Drehung des besagten Steuerelements (6) es ermöglicht, den Abstand der besagten ersten Walze (4) von der zweiten der besagten Walzen (5) zu regulieren;
- eine Sperrvorrichtung (7), dazu geeignet, die spontane Bewegung des besagten Antriebs-Kinematikmechanismus (22) zu blockieren;
**dadurch gekennzeichnet, dass** die besagte Sperrvorrichtung (7) ein bidirektionales Freilaufrad (8) ist, welches das besagte Steuerelement (6) mit dem besagten Antriebs-Kinematikmechanismus (22) verbindet und derart konfiguriert ist, durch eine Leerdrehung von vorbestimmter Amplitude des besagten Steuerelements (6) in die besagte Drehrichtung in beide Drehrichtungen gelöst werden zu können.

2. Ausrollmaschine (1) gemäß Patentanspruch 1, **dadurch gekennzeichnet, dass** das besagte, bidirektionale Freilaufrad (8) Folgendes umfasst:
- einen ersten Ring (9), der mit dem besagten Rahmen (2) eine Einheit bildet;
- einen zweiten Ring (10), der drehend mit dem besagten ersten Ring (9) um die besagte Drehachse (Y) verbunden ist und mit dem besagten Antriebs-Kinematikmechanismus (22) verbunden ist sowie mit dem besagten Steuerelement (6) auf eine solche Weise, dass er durch das besagte Steuerelement (6) in Drehung versetzt werden kann;
- eine Anschlageinheit (11), abnehmbar in einem Zwischenraum (12) angeordnet, der zwischen dem besagten ersten Ring (9) und dem besagten zweiten Ring (10) eingeschlossen ist;
wobei der besagte Zwischenraum (12) und die besagte Anschlageinheit (11) so konfiguriert sind, dass eine freie Konfiguration definiert wird, in der die wechselseitige Drehung der besagten Ringe (9, 10) zulässig ist, sowie eine blockierte Konfiguration, in der die besagte Anschlageinheit (11) zwischen den besagten Ringen (9, 10) fixiert ist, um die besagte, wechselseitige Drehung zu blockieren, wobei die besagte Anschlageinheit (11) so konfiguriert ist, dass sie spontan die besagte, blockierte Konfiguration annimmt.

3. Ausrollmaschine (1) gemäß Patentanspruch 2, **dadurch gekennzeichnet, dass** der besagte Zwischenraum (12) zwei verjüngte Bereiche (13, 14) aufweist, die in entgegengesetzte Richtungen verlaufen, wobei die Breite eines jeden der besagten, verjüngten Bereiche (13, 14) lotrecht zu der besagten Drehachse (Y) von einer Maximalbreite bis zu einer Mindestbreite abnimmt in der Richtung, die sich von dem anderen der besagten, verjüngten Bereiche (13, 14) entfernt, wobei die besagte Anschlageinheit (11) zwei geformte Körper (17, 18) umfasst, von denen ein jeder in einem entsprechenden der besagten, verjüngten Bereiche (13, 14) angeordnet ist und eine Maximalgröße aufweist, die die besagte Mindestbreite überschreitet, sowie elastische Mittel (19), die zwischen den besagten zwei geformten Körpern (17, 18) komprimiert sind, um diese wechselseitig voneinander fortzubewegen.

4. Ausrollmaschine (1) gemäß Patentanspruch 3, **dadurch gekennzeichnet, dass** der besagte Zwischenraum (12) zwei Manöverzonen (15, 16) hat, von denen jede mit einem entsprechenden der besagten, verjüngten Bereiche kommuniziert (13, 14), wobei das besagte Steuerelement (6) zwei hervorstehende Elemente (20) umfasst, von denen jedes in einer entsprechenden der besagten Manöverzonen (15, 16) angeordnet und so konfiguriert ist, dass es den besagten, geformten Körper (17, 18) in dem verjüngten Bereich (13, 14), der mit der besagten Manöverzone (15, 16) kommuniziert, zu dem anderen, geformten Körper (17, 18) drückt infolge der besagten Leerdrehung des besagten Steuerelements (6), und zwar derart, dass der besagte, zweite Ring (10) in Richtung der besagten Leerdrehung gelöst wird.

5. Ausrollmaschine (1) gemäß eines jeden der vorstehenden Patentansprüche, **dadurch gekennzeichnet, dass** sie Ausgleichsmittel umfasst, die dazu geeignet sind, auf die besagte, erste Walze (4) eine Kraft auszuüben, die dem Gewicht der besagten, ersten Walze (4) entgegenwirkt.

6. Ausrollmaschine (1) gemäß Patentanspruch 5, **dadurch gekennzeichnet, dass** die besagten Ausgleichsmittel einen Gaszylinder umfassen.

7. Ausrollmaschine (1) gemäß eines jeden der Patentansprüche 5 oder 6, **dadurch gekennzeichnet, dass** die besagten Ausgleichsmittel eine Feder umfassen.

8. Ausrollmaschine (1) gemäß eines jeden der vorstehenden Patentansprüche, **dadurch gekennzeichnet, dass** sie eine Endlagenvorrichtung umfasst, die so konfiguriert ist, dass sie den Gesamthub des besagten Steuerelements (6) begrenzt.

9. Ausrollmaschine (1) gemäß eines jeden der vorstehenden Patentansprüche, **dadurch gekennzeichnet, dass** die besagten zwei Walzen (4, 5) so angeordnet sind, dass die durch die besagten Längsachsen (X1, X2) definierte Ebene den besagten Arbeitstisch (3) in zwei Hälften teilt.

## Revendications

1. Machine lamineuse à pâtes (1) comprenant:
- un châssis (2) se posant sur le sol;
- un plan de travail (3) associé audit châssis (2);
- deux rouleaux (4, 5) associés de manière tournante audit châssis (2), dotés d'axes longitudinaux correspondants (X1, X2) parallèles entre eux et audit plan de travail (3);
- un élément de commande (6) accessible à un opérateur, associé de manière pivotante audit châssis (2) autour d'un axe de rotation (Y);
- un mécanisme cinématique de transmission (22) qui relie ledit élément de commande (6) à un premier desdits rouleaux (4) de façon à ce que la rotation dudit élément de commande (6) permet de régler la distance dudit premier rouleau (4) du deuxième desdits rouleaux (5);
- un dispositif de blocage (7) apte à empêcher le mouvement spontané dudit mécanisme cinématique de transmission (22);
**caractérisée en ce que** ledit dispositif de blocage (7) est une roue libre bidirectionnelle (8) qui relie ledit élément de commande (6) audit mécanisme cinématique de transmission (22), configurée de manière à pouvoir être débloquée dans chaque direction de rotation au moyen d'une rotation à vide, avec amplitude prédéfinie, dudit élément de commande (6) dans ladite direction de rotation.

2. Machine lamineuse à pâtes (1) selon la revendication 1, **caractérisée en ce que** ladite roue libre bidirectionnelle (8) comprend:
- un premier anneau (9) solidaire dudit châssis (2);
- un deuxième anneau (10) associé de manière pivotante audit premier anneau (9) autour dudit axe de rotation (Y), associé audit mécanisme cinématique de transmission (22) et à ladite élément de commande (6) de façon à ce qu'il puisse être entraîné en rotation par ledit élément de commande (6);
- un groupe d'arrêt (11) disposé de manière amovible dans un espace intermédiaire (12) compris entre ledit premier anneau (9) et ledit deuxième anneau (10);
ledit espace intermédiaire (12) et ledit groupe d'arrêt (11) étant configurés de façon à définir une configuration libre où la rotation réciproque entre lesdits anneaux (9, 10) est consentie et une configuration bloquée où ledit groupe d'arrêt (11) est fixé entre lesdits anneaux (9, 10) de façon à empêcher ladite rotation réciproque, ledit groupe d'arrêt (11) étant configuré de façon à se disposer spontanément dans ladite configuration bloquée.

3. Machine lamineuse à pâtes (1) selon la revendication 2, **caractérisée en ce que** ledit espace intermédiaire (12) présente deux zones coniques (13, 14) qui s'étendent selon des directions opposées, où la largeur de chacune desdites zones coniques (13, 14) perpendiculairement audit axe de rotation (Y) diminue en s'éloignant de l'autre desdites zones coniques (13, 14) d'une largeur maximale à une largeur minimale, ledit groupe d'arrêt (11) comprenant deux corps galbés (17, 18), chacun disposé dans une desdites zones coniques correspondante (13, 14) et pourvu d'une dimension maximale supérieure à ladite largeur minimale, et des moyens élastiques (19) comprimés entre lesdits deux corps galbés (17, 18) de façon à les éloigner réciproquement.

4. Machine lamineuse à pâtes (1) selon la revendication 3, **caractérisée en ce que** ledit espace intermédiaire (12) comprend deux zones de manoeuvre (15, 16), chacune communiquant avec une correspondante desdites zones coniques (13, 14), où ledit élément de commande (6) comprend deux éléments saillants (20), chacun disposé dans une zone correspondante desdites zones de manoeuvre (15, 16) et configuré de manière à pousser ledit corps galbé (17, 18) disposé dans la zone conique (13, 14) communiquant avec ladite zone de manoeuvre (15, 16) vers l'autre corps galbé (17, 18) en suivant ladite rotation à vide dudit élément de commande (6) de façon à débloquer ledit deuxième anneau (10) dans la direction de ladite rotation à vide.

5. Machine lamineuse à pâtes (1) selon l'une quelconque des revendications précédentes, **caractérisée en ce qu**'elle comprend des moyens d'équilibrage aptes à exercer sur ledit premier rouleau (4) une force opposée au poids dudit premier rouleau (4).

6. Machine lamineuse à pâtes (1) selon la revendication 5, **caractérisée en ce que** lesdits moyens d'équilibrage comprennent un cylindre à gaz.

7. Machine lamineuse à pâtes (1) selon l'une quelconque des revendications 5 ou 6, **caractérisée en ce que** lesdits moyens d'équilibrage comprennent un ressort.

8. Machine lamineuse à pâtes (1) selon l'une quelconque des revendications précédentes, **caractérisée en ce qu**'elle comprend un dispositif de fin de course configuré de manière à limiter la course totale dudit élément de commande (6).

9. Machine lamineuse à pâtes (1) selon l'une quelconque des revendications précédentes, **caractérisée en ce que** lesdits deux rouleaux (4, 5) sont disposés de façon à ce que le plan défini par lesdits axes longitudinaux (X1, X2) partage ledit plan de travail (3) en deux moitiés.
